# DEMANDE DE BREVET EUROPEEN

(11) **EP 4 036 728 A1**
(43) Date de publication de la demande: **03.08.2022**
(21) Numéro de dépôt: 21305114.7
(22) Date de dépôt: 29.01.2021
(51) Int. Cl.: G06F 9/54, H04L 29/06, H04L 12/761, H04L 12/741

(54) **PROCÉDÉ DE DIFFUSION DE PAQUETS D'INFORMATION À UNE PLURALITÉ DE DESTINATAIRES DANS UN RÉSEAU**

(71) Demandeur: Atos Integration, 95870 Bezons (FR)
(72) Inventeur: PIRES, Alexis, 31770 COLOMIERS (FR)
(74) Mandataire: Argyma

(57) **Abrégé**

Un procédé de diffusion d'un paquet d'information (P) dans un réseau (1) comprenant un expéditeur (2) dudit paquet (P) et une pluralité de destinataires (3) reliés par un équipement réseau (5) d'un serveur d'acheminement (4), ledit serveur d'acheminement (4) comprenant un système de calcul physique (7) et un système logiciel (6), ledit système de calcul physique (7) étant configuré pour opérer alternativement entre un mode noyau (M1) et un mode utilisateur (M2), ledit système logiciel (6) contrôlant la mise en oeuvre :
• d'une étape de réception (E1) du paquet (P),
• et, pour chaque destinataire (3), d'une étape de duplication (E2) du paquet (P), d'une étape de routage (E3) du paquet (P) grâce à une adresse IP dudit destinataire (3), et d'une étape d'envoi (E4) du paquet (P) au destinataire (3),
• chaque étape étant exécutée par le système de calcul physique (7) en mode noyau (M1). Figure de l'abrégé : Figure 2

## Description

### DOMAINE TECHNIQUE

La présente invention concerne le domaine de la diffusion de paquets d'information à une pluralité de destinataires dans un réseau.

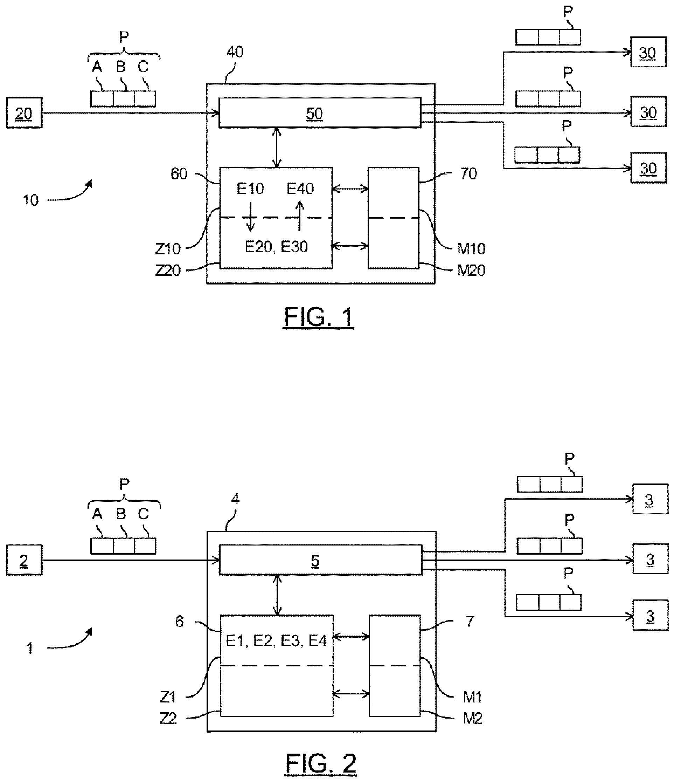

De manière connue, la figure 1 représente un réseau 10 comprenant un expéditeur 20 d'information et une pluralité de destinataires 30, identifiés chacun par une adresse IP dans le réseau 10 et reliés par un ensemble de routeurs et de commutateurs (non représentés). L'information, telle qu'un flux vidéo ou un flux audio, est diffusée par l'expéditeur 20 dans le réseau 10 sous la forme de flux comprenant plusieurs paquets P. Chaque paquet P comporte des données utiles C, formant ensemble l'information à diffuser, ainsi que des métadonnées, permettant notamment l'acheminement du paquet P, telles qu'une adresse IP source A et une adresse IP de destination B. Un unique paquet P est représenté à titre d'exemple sur la figure 1.

La figure 1 illustre une diffusion de type centralisée dans laquelle le réseau 10 comporte en outre un serveur d'acheminement 40 comprenant un équipement réseau 50 relié, d'une part, à l'expéditeur 20, et d'autre part, à chaque destinataire 30. Le serveur d'acheminement 40 comprend également un système de calcul physique 70, tel qu'un processeur, et un système logiciel 60 configuré pour consommer le système de calcul physique 70. Le système logiciel 60 comporte classiquement un système d'exploitation, connu sous son acronyme « OS », et un ensemble de composants applicatifs tiers, tels que des programmes. Comme illustré sur la figure 1, le système logiciel 60 est configuré pour contrôler la réception E10 du paquet P de l'expéditeur 20 et sa redistribution à chaque destinataire 30. La redistribution du paquet P comprend, pour chaque destinataire 30, le traitement puis l'envoi E40 du paquet P, le traitement étant mis en œuvre par duplication E20 et routage E30 du paquet P grâce à l'adresse IP du destinataire 30. Les différentes étapes E10, E20, E30, E40 sont exécutées par le système de calcul physique 70. On précise que le terme « routage » employé ici et dans l'ensemble du document désigne un routage applicatif, à savoir le choix de l'adresse IP du destinataire 30 à partir de métadonnées applicatives.

De manière connue, comme illustré sur la figure 1, le système logiciel 60 et le système de calcul physique 70 comportent respectivement deux zones de fonctionnement et deux modes de fonctionnement distincts. Plus précisément, le système logiciel 60 comporte une zone noyau Z10 et une zone utilisateur Z20, connues respectivement sous leur dénomination anglaise « kernel zone » et « user zone ». Le système de calcul physique 70 comporte quant à lui un mode noyau M10 et un mode utilisateur M20, connus respectivement sous leur dénomination anglaise « kernel mode » et « user mode ». En référence à la figure 1, les étapes de réception E10 et d'envoi E40 du paquet P sont exécutées en mode noyau M10 tandis que les étapes de duplication E20 et de routage E30, de nature plus complexe, nécessitent d'être exécutées en mode utilisateur M20. En effet, la zone noyau Z10 permet un accès total au système de calcul physique 70 ce qui permet de réaliser des opérations privilégiées. Le mode noyau M10 est contrôlé et consommé de manière exclusive par la zone noyau Z10, pour des tâches élémentaires et basiques. La zone utilisateur Z20 permet quant à elle uniquement un accès restreint au système de calcul physique 70, mais est librement accessible par tous les programmes. Le mode utilisateur M20 permet de réaliser des opérations plus complexes.

En pratique, la zone noyau Z10 et la zone utilisateur Z20 du système logiciel 60 sont cloisonnées et il est nécessaire de pratiquer une interruption système pour passer d'une zone à l'autre, à savoir entre les étapes de réception E10 et de duplication E20 et entre les étapes de routage E30 et d'envoi E40. Il en va de même pour le mode noyau M10 et le mode utilisateur M20 du système de calcul physique 70. De telles interruptions système sont coûteuses en termes de temps et de ressources, ce qui augmente le temps de latence, c'est-à-dire, le temps de remise du paquet P aux destinataires 30. Une telle latence est indésirable car elle peut affecter la réactivité et la prise de décision des destinataires 30 dans le cadre de diffusion d'informations en temps réel, en particulier dans le cadre d'un serveur d'acheminement 40 contraint en termes de ressources. En outre, la latence est susceptible de varier d'un destinataire 30 à l'autre, ce qui peut entraîner des prises de décision différentes des destinataires.

A titre d'exemple, dans le domaine militaire, l'accès à des données aériennes en temps réel est un atout majeur pour des unités au sol en mission. A cet effet, il est connu d'équiper un drone d'une caméra vidéo reliée informatiquement aux unités au sol, de manière à former respectivement l'expéditeur 20 et les destinataires 30. Les données aériennes sont diffusées sous forme de paquets P à un serveur d'acheminement 40 porté par l'une des unités au sol pour être redistribuées à chaque unité au sol. En pratique, le serveur d'acheminement 40 doit ainsi être mobile, léger et robuste, ce qui lui confère des ressources limitées. Dans un tel contexte, la latence entraînée par les interruptions système est susceptible de compromettre la réussite de la mission, par exemple en avertissant trop tardivement d'un danger ou en induisant une désynchronisation entre les unités au sol.

De manière incidente, dans le domaine des réseaux privés, il est connu un autre type de diffusion, dit multidiffusion IP ou « IP multicast » sous sa dénomination anglaise, dans lequel la redistribution du paquet est assurée directement par les routeurs et commutateurs du réseau, auxquels s'abonnent les destinataires pour recevoir le flux d'information souhaité. Une telle diffusion est efficace mais ne peut toutefois être utilisée pour les réseaux publics. En effet, cela nécessiterait de configurer l'ensemble des routeurs et commutateurs situés entre l'expéditeur et les destinataires, ce que ne permettent généralement pas les fournisseurs d'infrastructures car les équipements sont mutualisés. Une solution immédiate serait d'ajouter un réseau local au-dessus du réseau existant en mettant en œuvre une encapsulation au niveau de la couche de liaison. Cela ajouterait toutefois des métadonnées et des traitements supplémentaires, à l'origine de latence.

Il est par ailleurs connu de recourir à une diffusion paire à paire, dans laquelle l'expéditeur diffuse un flux d'informations directement et séparément à chacun des destinataires. Une telle diffusion comporte une scalabilité faible à savoir qu'elle est très efficace pour de la diffusion avec un unique destinataire mais n'est pas adaptée pour de la diffusion de groupe et induit également une latence importante.

L'invention vise ainsi un procédé de diffusion de paquets d'information à une pluralité de destinataires dans un réseau, qui permette de réduire la latence sans augmenter les ressources nécessaires.

### PRESENTATION DE L'INVENTION

L'invention concerne un procédé de diffusion d'au moins un paquet d'information dans un réseau, ledit réseau comprenant au moins un expéditeur dudit paquet, une pluralité de destinataires et au moins un serveur d'acheminement comprenant au moins un équipement réseau qui est relié à l'expéditeur et à chacun des destinataires, ledit serveur d'acheminement comprenant au moins un système de calcul physique et au moins un système logiciel configuré pour contrôler le système de calcul physique, ledit système de calcul physique étant configuré pour opérer alternativement entre un mode noyau d'accès total et un mode utilisateur d'accès restreint, chaque destinataire étant identifié par une adresse IP préalablement transmise au système logiciel via l'équipement réseau, ledit système logiciel contrôlant la mise en œuvre :
- d'une étape de réception du paquet de l'expéditeur,
- et, pour chaque destinataire :
   ∘ d'une étape de duplication du paquet,
   ∘ d'une étape de routage du paquet grâce à l'adresse IP dudit destinataire, et
   ∘ d'une étape d'envoi du paquet de manière à le diffuser au destinataire,
- l'étape de réception et l'étape d'envoi étant exécutées par le système de calcul physique en mode noyau.

L'invention est remarquable en ce que l'étape de duplication et l'étape de routage sont exécutées par le système de calcul physique en mode noyau.

Grâce à l'invention, le temps de latence d'un paquet d'informations, à savoir la durée s'écoulant entre la date d'émission du paquet par un expéditeur et sa date de réception par un destinataire, est réduite, en particulier pour un grand nombre de destinataires. Un tel gain de temps résulte du traitement du paquet dans le serveur d'acheminement, qui est avantageusement opéré par le système de calcul physique en mode noyau plutôt qu'en mode utilisateur comme dans l'art antérieur. Ainsi, le système de calcul physique est utilisé en mode noyau pour chacune des étapes de réception, duplication, routage et envoi ce qui évite de devoir pratiquer plusieurs interruptions système chronophages pour passer d'un mode à l'autre, les modes noyau et utilisateur étant cloisonnés. En outre, un tel procédé de diffusion permet de diminuer le temps de latence dans des réseaux contraints en termes de ressources, tels que dans le domaine militaire pour la diffusion de données aériennes en temps réel aux unités au sol, sans nécessiter d'augmentation de ressources.

Selon un aspect de l'invention, le système logiciel comprend une zone noyau et une zone utilisateur configurées pour alternativement contrôler le système de calcul physique, l'étape de réception, l'étape de duplication, l'étape de routage et l'étape d'envoi étant contrôlées par la zone noyau du système logiciel.

L'invention détourne avantageusement l'utilisation de la zone noyau du système logiciel, auparavant réservée pour les opérations d'entrée et sortie du serveur d'acheminement, aux opérations de traitement du paquet d'informations. Une telle deuxième utilisation de la zone noyau n'est pas intuitive pour l'homme du métier car la zone noyau n'offre que des fonctions basiques et très limitées, ce qui complexifie et restreint le traitement des paquets d'informations.

Selon un aspect préféré de l'invention, toutes les étapes du procédé de diffusion sont exécutées par le système de calcul physique en mode noyau. Autrement dit, entre l'étape de réception et l'étape d'envoi, le procédé de diffusion ne nécessite de mettre en œuvre aucune interruption système. Ceci maximise avantageusement le gain de temps pour diffuser le paquet à chaque destinataire.

Selon un aspect de l'invention, le procédé de diffusion est exempt, entre l'étape de réception et l'étape d'envoi, d'étape de traitement du paquet autre que les étapes de duplication et de routage. L'utilisation de la zone noyau impose en effet de restreindre le traitement du paquet à des fonctions basiques, simples et essentielles, à savoir les étapes de duplication et de routage. Le procédé selon l'invention permet ainsi une diffusion rapide et basique de paquets d'information en environnement contraint.

Selon un aspect de l'invention, lors de l'étape de routage, le paquet comprenant des données et une adresse de destination, l'adresse IP du destinataire est ajoutée dans l'adresse de destination du paquet. Le traitement du paquet est ainsi mis en œuvre en générant un duplicata et en y spécifiant l'adresse de destination pour chaque destinataire, de manière simple et rapide.

Selon un aspect de l'invention, l'étape de duplication génère un paquet dit dupliqué à partir d'un paquet dit d'origine, l'étape d'envoi étant mise en œuvre avec le paquet dupliqué, dans le cadre d'une diffusion de type point-à-point.

Selon un aspect préféré de l'invention, le système logiciel comporte un cadriciel Netfilter, l'étape de duplication et/ou l'étape de routage étant contrôlée par le cadriciel Netfilter. On précise que le terme « cadriciel » désigne une infrastructure de logiciel, connue sous sa dénomination anglaise « framework ». L'invention propose ainsi d'utiliser judicieusement le cadriciel Netfilter pour permettre de contrôler la mise en œuvre de l'étape de duplication et/ou de l'étape de routage en mode noyau.

Selon un aspect de l'invention, le système logiciel comporte un cadriciel Netfilter comprenant un module nftables, les étapes de duplication et de routage étant contrôlées par le module nftables. Le module nftables présente l'avantage de permettre la mise en œuvre des étapes de routage et de duplication en mode noyau de manière facile et rapide.

Selon un aspect, le module nftables implémente, pour chaque destinataire, l'étape de duplication et l'étape de routage à partir d'une même règle associée audit destinataire. L'exécution d'une unique règle permet d'optimiser le traitement du paquet.

De préférence, l'étape de routage est mise en œuvre avant l'étape de duplication. Le procédé de diffusion de l'invention s'oppose ainsi à l'ordre traditionnel des étapes pour s'adapter aux contraintes de la zone noyau. En effet, la zone noyau implique de n'utiliser que des fonctions basiques contrairement à la zone utilisateur et considère notamment la duplication comme une action terminale au sein d'une règle.

Selon un autre aspect de l'invention, le système logiciel comporte un cadriciel Netfilter comprenant un module iptables, l'étape de duplication étant contrôlée par le module iptables. Le module iptables présente l'avantage d'être plus répandu que le module nftables.

Selon un aspect, le système de calcul physique exécute, pour chaque destinataire, l'étape de routage au moyen d'un conteneur associé audit destinataire. De préférence, le module iptables implémente, pour chaque destinataire, l'étape de duplication à partir d'une règle associée audit destinataire. L'utilisation d'un conteneur permet avantageusement de réaliser le traitement du paquet en passant outre les limitations du module iptables en termes de fonctions. En effet, le conteneur permet de mettre en œuvre le routage que n'autorise pas la règle dans laquelle est spécifiée la duplication.

De préférence, l'étape de routage est mise en œuvre après l'étape de duplication. L'utilisation d'un conteneur permet avantageusement de mettre en œuvre les étapes de duplication et de routage dans le même ordre que le mode utilisateur traditionnel.

De préférence, lors de l'étape de routage, le paquet comprenant une adresse source, l'adresse du serveur d'acheminement est spécifiée dans l'adresse source du paquet. Ceci permet avantageusement de respecter les règles de sécurité de la zone noyau et ainsi d'éviter la destruction du paquet par la zone noyau.

Selon un aspect préféré de l'invention, lors de l'étape de réception, le réseau comprenant une pluralité d'expéditeurs d'au moins un paquet et le système de calcul physique comportant un port propre à chaque expéditeur, le paquet d'un expéditeur donné est associé au port propre audit expéditeur donné. Ceci permet avantageusement de traiter les paquets de plusieurs expéditeurs en parallèle.

L'invention concerne également l'ensemble d'un procédé de diffusion tel que décrit précédemment et d'une étape de signalisation mise en œuvre de manière préalable audit procédé de diffusion et lors de laquelle l'expéditeur se signale comme tel auprès du système logiciel via l'équipement réseau et chaque destinataire transmet son adresse IP pour recevoir le paquet.

Selon un aspect préféré, lors de l'étape de signalisation, le système logiciel reçoit un signal de l'expéditeur, afin de préparer la diffusion du paquet. De préférence, le système logiciel affecte un port propre audit expéditeur. De préférence, le cadriciel Netfilter - le module nftables ou le module iptables - implémente une règle de destruction du paquet à la fin du procédé de diffusion.

Selon un aspect préféré, lors de l'étape de signalisation, le système logiciel reçoit un signal de chaque destinataire, afin de préparer la diffusion du paquet. De préférence, le cadriciel Netfilter génère, pour chaque destinataire, une règle pour permettre la mise en œuvre de l'étape de duplication et/ou de l'étape de routage.

Selon un premier aspect préféré, le module nftables du cadriciel Netfilter implémente, pour chaque destinataire, une règle pour permettre la mise en œuvre des étapes de duplication et de routage.

Selon un deuxième aspect préféré, le module iptables implémente, pour chaque destinataire, une règle pour permettre la mise en œuvre de l'étape de duplication. De préférence, le système logiciel, génère, pour chaque destinataire, un conteneur pour permettre la mise en œuvre de l'étape de routage.

### PRESENTATION DES FIGURES

L'invention sera mieux comprise à la lecture de la description qui va suivre, donnée à titre d'exemple, et se référant aux figures suivantes, données à titre d'exemples non limitatifs, dans lesquelles des références identiques sont données à des objets semblables.
La figure 1 est une représentation schématique du procédé de diffusion de type centralisée selon l'art antérieur ;
[La figure 2 est une représentation schématique d'un procédé de diffusion de paquets d'information à une pluralité de destinataires dans un réseau selon une forme de réalisation de l'invention ;
La figure 3 est une représentation schématique d'une étape de signalisation préalable au procédé de diffusion de la figure 2 selon une première forme de réalisation de l'invention mise en œuvre avec un module nftables du cadriciel Netfilter ;
La figure 4 est une représentation schématique des étapes de réception, de duplication, de routage et d'envoi du procédé de diffusion selon la première forme de réalisation de l'invention de la figure 3 ;
La figure 5 est une représentation schématique d'une étape de signalisation préalable au procédé de diffusion de la figure 2 selon une deuxième forme de réalisation de l'invention mise en œuvre avec un module iptables du cadriciel Netfilter ; et
La figure 6 est une représentation schématique des étapes de réception, de duplication, de routage et d'envoi du procédé de diffusion selon la deuxième forme de réalisation de l'invention de la figure 5.

Il faut noter que les figures exposent l'invention de manière détaillée pour mettre en œuvre l'invention, lesdites figures pouvant bien entendu servir à mieux définir l'invention le cas échéant.

### DESCRIPTION DETAILLEE DE L'INVENTION

L'invention concerne un procédé de diffusion d'information de type centralisé à un ensemble de destinataires dans un réseau. Plus précisément, l'invention concerne un procédé de diffusion d'information de type :
- point-à-point, connu sous sa dénomination anglaise « unicast », dans lequel l'information est diffusée séparément à chaque destinataire,
- sans état, connu sous sa dénomination anglaise « stateless », dans lequel l'information est diffusée de manière indépendante, et
- simplex, dans lequel l'information est diffusée unilatéralement vers chaque destinataire.

De préférence, l'invention concerne un procédé de diffusion d'information de type UDP.

En référence à la figure 2 et comme décrit dans le préambule, il est représenté un réseau 1 comprenant un expéditeur 2 d'information, plusieurs destinataires 3 et un serveur d'acheminement 4, tous identifiés par une adresse IP propre dans le réseau 1. Le serveur d'acheminement 4 comprend un équipement réseau 5 relié, d'une part, à l'expéditeur 2, et d'autre part, à chaque destinataire 3. Le serveur d'acheminement 4 comprend également un système de calcul physique 7, tel qu'un processeur, et un système logiciel 6. Le système logiciel 6 comporte classiquement un système d'exploitation, connu sous son acronyme « OS », et un ensemble de composants applicatifs tiers, tels que des programmes. Le système logiciel 6 est configuré pour contrôler la réception de l'information de l'expéditeur 2 et sa redistribution à chaque destinataire 3. Plus précisément, le système logiciel 6 fournit des instructions au système de calcul physique 7 que ce dernier exécute. Le réseau 1 de la figure 2 désigne à titre d'exemple non limitatif un réseau de type militaire dans lequel l'expéditeur 2 se présente sous la forme d'un drone équipé d'une caméra vidéo afin de fournir des données aériennes à un ensemble d'unités au sol, formant les destinataires 3. Le serveur d'acheminement 4 est quant à lui mobile, de manière à être embarqué dans un sac à dos ou dans un véhicule d'une des unités au sol.

En référence à la figure 2 et comme décrit dans le préambule, l'information se présente sous la forme d'un flux vidéo ou d'un flux audio, notamment de données aériennes, et est diffusée par l'expéditeur 2 dans le réseau 1 sous la forme de flux comprenant plusieurs paquets P. Chaque paquet P comporte des données utiles C, formant ensemble l'information à diffuser, ainsi que des métadonnées, permettant notamment l'acheminement du paquet P, telles qu'une adresse IP source A et une adresse IP de destination B. Un unique paquet P est représenté sur la figure 2.

Toujours en référence à la figure 2 et comme décrit dans le préambule, le système logiciel 6 et le système de calcul physique 7 comportent respectivement deux zones de fonctionnement et deux modes de fonctionnement distincts. Plus précisément, le système logiciel 6 comporte une zone noyau Z1 et une zone utilisateur Z2, connues respectivement sous leur dénomination anglaise « kernel zone » et « user zone ». Le système de calcul physique 7 comporte quant à lui un mode noyau M1 et un mode utilisateur M2, connus respectivement sous leur dénomination anglaise « kernel mode » et « user mode ». La zone noyau Z1 permet un accès total au système de calcul physique 7 ce qui permet de réaliser des opérations privilégiées. Le mode noyau M1 est contrôlé et consommé de manière exclusive par la zone noyau Z1, pour des tâches élémentaires et basiques. La zone utilisateur Z2 permet quant à elle uniquement un accès restreint au système de calcul physique 7, mais est librement accessible par tous les programmes. Le mode utilisateur M2 permet de réaliser des opérations plus complexes. En pratique, la zone noyau Z1 et la zone utilisateur Z2 du système logiciel 6 sont cloisonnées et il est nécessaire de pratiquer une interruption système pour passer d'une zone à l'autre. Il en va de même pour le mode noyau M1 et le mode utilisateur M2 du système de calcul physique 7.

Un réseau 1 de diffusion de type centralisé à plusieurs destinataires 3 est connu en soi de l'homme du métier de sorte que son architecture ne sera pas décrite davantage.

L'invention est décrite par la suite dans le cadre du réseau 1 de l'exemple de la figure 2, dans lequel un unique expéditeur 2 d'un unique paquet P et trois destinataires 3 sont représentés à des fins de clarté. Il va cependant de soi que l'invention s'applique pour un nombre quelconque de paquets P. Par ailleurs, il va de soi que l'invention s'applique pour un réseau 1 avec un nombre quelconque d'expéditeurs 2 et de destinataires 3, un expéditeur 2 pouvant également par ailleurs être un destinataire 3 et inversement. Par ailleurs, le réseau 1 est dans l'exemple de la figure 2 réduit à un serveur d'acheminement 4 avec un unique équipement réseau 5 et un ensemble de d'expéditeurs 2 et de destinataires 3, mais il va de soi que le réseau 1 comprend un nombre quelconque d'éléments, tels que des routeurs et des commutateurs notamment.

Selon l'invention et en référence à la figure 2, le procédé de diffusion comporte les étapes suivantes, dont la mise en œuvre est contrôlée par le système logiciel 6 du serveur d'acheminement 4 :
- une étape de réception E1 du paquet P de l'expéditeur 2,
- et, pour chaque destinataire 3 :
   ∘ une étape de duplication E2 du paquet P,
   ∘ une étape de routage E3 du paquet P grâce à l'adresse IP dudit destinataire 3, et
   ∘ une étape d'envoi E4 du paquet P de manière à le diffuser au destinataire 3,
- l'ensemble des étapes de réception E1, de duplication E2, de routage E3 et d'envoi E4 étant exécutées par le système de calcul physique 7 en mode noyau M1, et de manière préférée, contrôlées par la zone noyau Z1 du système logiciel 6.

Comme ce sera décrit par la suite, l'adresse IP de chaque destinataire 3 est transmise au serveur d'acheminement 4 lors d'une étape de signalisation préalable au procédé de diffusion. On précise également que le terme « routage » employé ici et dans l'ensemble du document désigne un routage applicatif, à savoir le choix de l'adresse IP du destinataire 3 à partir de métadonnées applicatives.

Ainsi, la zone noyau Z1 du système logiciel 6 est utilisée pour contrôler les opérations d'entrée et sortie du serveur d'acheminement 4, à savoir les étapes de réception E1 et d'envoi E4, mais également pour le traitement du paquet P, à savoir les étapes de duplication E2 et de routage E3. L'utilisation de la zone noyau Z1 pour le traitement du paquet P permet avantageusement d'éviter des interruptions système, notamment après l'étape de réception E1 et avant l'étape d'envoi E4, ce qui permet de réduire significativement le temps de latence du paquet P. Un tel gain de temps est obtenu indépendamment des ressources de calcul du serveur d'acheminement 4 et présente donc un intérêt particulier pour un serveur d'acheminement 4 contraint en termes de ressources, tel que dans le réseau militaire précédemment décrit. Dans un tel réseau militaire, le serveur d'acheminement 4 doit en effet être léger, peu encombrant et robuste pour pouvoir être embarqué aisément dans un véhicule ou un sac à dos.

En pratique, le mode noyau M1 du système de calcul physique 7 n'est accessible qu'au travers de la zone noyau Z1 du système logiciel 6 qui est restreinte en termes d'opérations et ne propose que des fonctions basiques et élémentaires non adaptées en tant que telles pour le traitement du paquet P. Pour surmonter les limitations liées à la zone noyau Z1, l'invention prévoit de préférence d'utiliser un système logiciel 6 comportant un cadriciel Netfilter et l'un de ses modules : nftables ou iptables. On précise que le terme « cadriciel » désigne une infrastructure de logiciel, connue sous sa dénomination anglaise « framework ». Le cadriciel Netfilter et ses modules nftables et iptables sont supposés connus en soi de l'homme du métier. On rappelle toutefois ici qu'ils sont installés dans la zone noyau Z1 du système logiciel 6 et sont contrôlés depuis la zone utilisateur Z2. Le cadriciel Netfilter et ses modules comportent notamment des tables prédéfinies, telles qu'une table de filtrage (« filter table ») et une table de traduction d'adresse de paquets (« NAT table ») à titre d'exemples, ainsi que des événements prédéfinis du cycle de vie d'un paquet auxquels sont attachés des chaînes. Les chaînes permettent de spécifier un ensemble de règles et leur enchaînement, à savoir l'ordre dans lequel les règles sont mises en œuvre. De telles chaînes peuvent être modifiées, créées et supprimées pour générer diverses commandes, ce qui permet avantageusement dans le cadre de l'invention de commander le traitement du paquet P de manière pratique et simple, comme ce sera présenté par la suite.

On décrit par la suite plus précisément chaque étape du procédé de diffusion de l'invention, dans un premier temps pour un système logiciel 6 comportant un cadriciel Netfilter avec un module nftables et, dans un deuxième temps, pour un système logiciel 6 comportant un cadriciel Netfilter avec un module iptables. On précise que l'invention, si elle est de préférence mise en œuvre avec le cadriciel Netfilter et ses modules nftables ou iptables, ne se limite pas à ces deux modes de réalisation préférés.

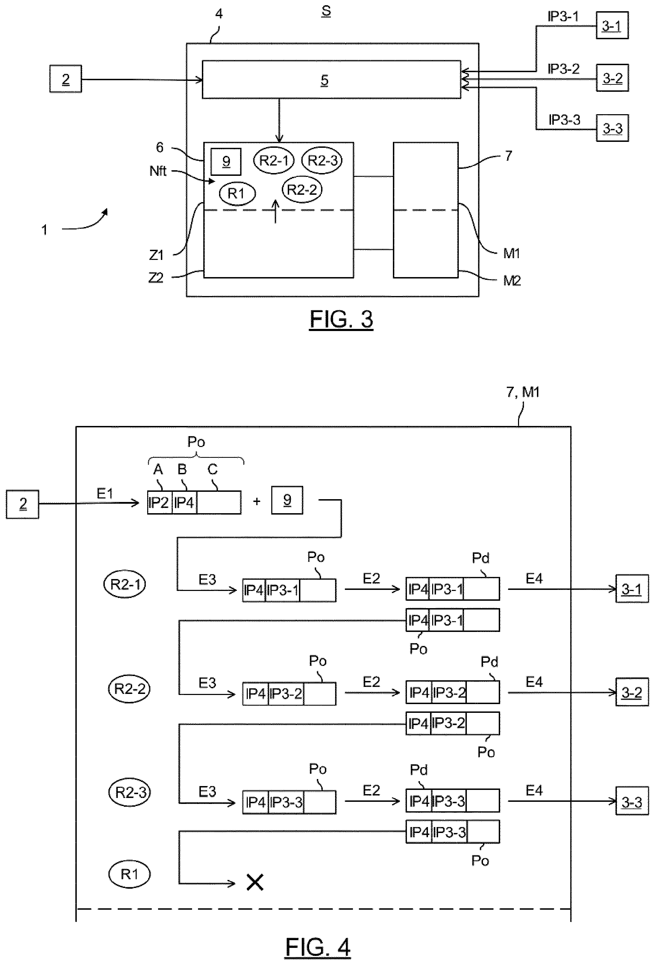

En référence à la figure 3 et comme décrit précédemment, le procédé de diffusion est précédé par une étape de signalisation S qui permet de préparer le procédé de diffusion. Lors de l'étape de signalisation S, l'expéditeur 2 signale qu'il souhaite diffuser un paquet P au système logiciel 6 du serveur d'acheminement 4, via l'équipement réseau 5. De manière analogue, chaque destinataire 3-1, 3-2, 3-3 signale qu'il souhaite recevoir le paquet P au système logiciel 6 et transmet son adresse IP IP3-1, IP3-2, IP3-3 en vue de l'étape de routage E3. En pratique, l'expéditeur 2 génère un flux et chaque destinataire 3-1, 3-2, 3-3 indique qu'il souhaite s'abonner au flux engendré par l'expéditeur 2. Ces signaux permettent au système logiciel 6 d'affecter un port 9 audit expéditeur 2 et de générer des règles R1, R2-1, R2-2, R2-3 pour permettre à la zone noyau Z1 de commander au système de calcul physique 7 l'exécution des étapes de duplication E2 et de routage E3 en mode noyau M1.

Plus précisément, comme illustré sur la figure 3, à réception du signal de l'expéditeur 2, le système logiciel 6 affecte un port 9 qui est dédié à l'expéditeur 2, dans cet exemple pour un flux de type UDP. On précise que dans le cas de plusieurs expéditeurs 2, le système logiciel 6 affecte ainsi un port 9 à chaque expéditeur 2, qui lui est propre. Outre l'affectation du port 9, le système logiciel 6, utilisant le module nftables Nft du cadriciel Netfilter dans cet exemple, génère une première règle R1 qui commande l'élimination du paquet P après les étapes de duplication E2 et de routage E3 comme ce sera décrit par la suite. De préférence, la première règle R1 est stockée au sein d'une chaine de type filtrage, elle-même attachée aux événements, « hook » en anglais, de type « prerouting ».

Toujours en référence à la figure 3, à réception du signal de chaque destinataire 3, le système logiciel 6, utilisant le module nftables Nft du cadriciel Netfilter dans cet exemple, génère, pour chaque destinataire 3-1, 3-2, 3-3, une deuxième règle R2-1, R2-2, R2-3 qui commande conjointement les étapes de duplication E2 et de routage E3, comme ce sera décrit par la suite. Dans cet exemple, trois deuxièmes règles R2-1, R2-2, R2-3 sont ainsi créées. De préférence, les deuxièmes règles R2-1, R2-2, R2-3 sont stockées dans la même chaîne que la première règle R1 et de telle manière à être mises en œuvre avant la première règle R1. Autrement dit, les deuxièmes règles R2-1, R2-2, R2-3 et la première règle R1 sont stockées successivement au sein d'une chaîne de type filtrage, elle-même attachée aux événements de type « prerouting ».

A la fin de l'étape de signalisation S, avant la mise en œuvre du procédé de diffusion, un port 9 est affecté à l'expéditeur 2 et le système logiciel 6 dispose de l'adresse IP IP-1, IP-2, IP-3 de chaque destinataire 3-1, 3-2, 3-3 s'abonnant à la diffusion de l'expéditeur 2. Des règles R1, R2-1, R2-2, R2-3 sont en outre implémentées grâce au module nftables Nft pour mettre en œuvre le traitement du paquet P en mode noyau M1. Il s'agit d'une part, de deuxièmes règles R2-1, R2-2, R2-3, chacune assurant conjointement la duplication et le routage pour un destinataire 3-1, 3-2, 3-3, et d'autre part, d'une première règle R1 assurant l'élimination finale du paquet P.

En pratique, l'étape de signalisation S est contrôlée par la zone utilisateur Z2 du système logiciel 6. En effet, comme décrit précédemment, le cadriciel Netfilter est situé dans la zone noyau Z1 mais configuré depuis la zone utilisateur Z2.

En référence à la figure 4 et comme décrit précédemment, le procédé de diffusion est mis en œuvre après l'étape de signalisation S et débute par une étape de réception E1. Pour mettre en œuvre l'étape de réception E1, l'équipement réseau 5 provoque une interruption système et bascule le système de calcul physique 7 en mode noyau M1. Lors de l'étape de réception E1, le système de calcul physique 7 est ainsi en mode noyau M1 et reçoit le paquet P, qui est associé au port 9. Dans le cas de plusieurs paquets P d'un même expéditeur 2, ceux-ci sont ainsi tous associés au même port 9. Par ailleurs, dans le cas de plusieurs paquets P de différents expéditeurs 2, chaque paquet P est associé au port 9 affecté à l'expéditeur 2 dudit paquet P. Ceci permet avantageusement de diffuser plusieurs paquets P de différents expéditeurs 2 en parallèle.

En référence à la figure 4 et comme décrit précédemment, après l'étape de réception E1, le système de calcul physique 9 met ensuite en œuvre les étapes de routage E3, de duplication E2 et d'envoi E4 pour le premier destinataire 3-1, puis répète cet enchaînement pour chaque destinataire 3-2, 3-3. Dans cet exemple, cet enchaînement est ainsi répété une première fois pour le deuxième destinataire 3-2 et une deuxième fois pour le troisième destinataire 3-3. L'ensemble des étapes de routage E3, de duplication E2 et d'envoi E4 sont mises en œuvre dans le mode noyau M1 du système de calcul physique 7. Le traitement du paquet P en mode noyau M1 est permis grâce aux règles R1, R2-1, R2-2, R2-3 implémentées par le module nftables Nft. Cela permet d'éviter de devoir réaliser d'interruption système chronophage du système de calcul physique 7 mais impose un traitement basique du paquet P, dans cet exemple restreint aux uniques étapes de duplication E2 et de routage E3.

Plus précisément, comme illustré sur la figure 4, les étapes de routage E3 et de duplication E2 sont commandées par les deuxièmes règles R2-1, R2-2, R2-3 implémentées lors de l'étape de signalisation S. Pour chaque destinataire 3-1, 3-2, 3-3, la deuxième règle R2-1, R2-2, R2-3 commande la mise en œuvre de l'étape de routage E3 avant celle de l'étape de duplication E2 qui nécessite d'être une action finale dans le cadre du cadriciel nftables Nft. Ainsi, l'étape de routage E3 est mise en œuvre préalablement à l'étape de duplication E2, à savoir de manière inversée par rapport à ce qui est fait traditionnellement, pour permettre le traitement du paquet P en mode noyau M1 au moyen d'une seule et unique règle R2-1, R2-2, R2-3, de manière simple et rapide.

On décrit par la suite l'étape de routage E3, l'étape de duplication E2 et l'étape d'envoi E4 au premier destinataire 3-1 commandée par la deuxième règle R2-1.

Comme illustré sur la figure 4, lors de l'étape de routage E3, l'adresse source A et l'adresse de destination B du paquet P réceptionné, dit par la suite « paquet d'origine Po », sont modifiées. L'adresse IP4 du serveur d'acheminement 4 est ajoutée dans l'adresse source A, à la place de l'adresse IP2 de l'expéditeur 2, de manière à contourner les mécanismes de sécurité de la zone noyau Z1. L'adresse IP3-1 du premier destinataire 3-1 est ensuite ajoutée dans l'adresse de destination B, à la place de l'adresse IP4 du serveur d'acheminement 4. La somme de contrôle, permettant de vérifier l'intégrité du paquet P, est recalculée à la fin de l'étape de routage E3 pour qu'elle corresponde aux modifications de métadonnées IP réalisées précédemment. Le choix de la table de filtrage pour héberger la deuxième règle R2-1 permet avantageusement d'éviter la survenue d'un mécanisme de sécurité lors de l'étape d'envoi E4, lié au suivi de connexion et connu sous sa dénomination anglaise « conntrack ».

Comme illustré sur la figure 4, lors de l'étape de duplication E2, une copie du paquet d'origine Po est ensuite réalisée, dite « paquet dupliqué Pd ». Le paquet d'origine P0 et le paquet dupliqué Pd sont strictement identiques, à savoir comprennent les mêmes données C et les mêmes métadonnées. L'étape d'envoi E4 au premier destinataire 3-1 est ensuite mise en œuvre avec le paquet dupliqué Pd, de manière à conserver le paquet d'origine Po pour la suite du procédé de diffusion.

Comme illustré sur la figure 4, la deuxième règle R2-2 associée au deuxième destinataire 3-2 est exécutée à l'issue de la deuxième règle R2-1 associée au premier destinataire 3-1. L'étape de routage E3 et l'étape de duplication E2 sont mises en œuvre de manière analogue à précédemment, si ce n'est que le paquet d'origine Po utilisé est celui conservé à l'issue de l'étape de duplication E2 précédente et que l'adresse de destination B est modifiée avec l'adresse IP3-2 du deuxième destinataire 3-2. Le paquet dupliqué Pd obtenu à l'issue de la deuxième règle R2-2 est ensuite envoyé E4 au deuxième destinataire 3-2. Il est ensuite opéré de même pour le troisième destinataire 3-3. A l'issue des étapes de duplication E2, la première règle R1 est en outre exécutée pour éliminer le paquet d'origine Po restant.

Pour résumer, en référence aux figures 3 et 4, le procédé de diffusion est entièrement mis en œuvre dans le mode noyau M1 du système de calcul physique 7 et contrôlées par la zone noyau Z1 du système logiciel 6, en exécutant des règles R1, R2-1, R2-2, R2-3 implémentées dans le cadriciel nftables Nft de Netfilter dont dispose le système logiciel 6. L'étape de routage E3 et l'étape de duplication E2 sont avantageusement mises en œuvre par une même règle R2-1, R2-2, R2-3 de manière simple et rapide, en mettant astucieusement en œuvre l'étape de duplication E2 après l'étape de routage E3.

On décrit par la suite un autre mode de réalisation de l'invention dans le cadre d'un système logiciel 6 équipé d'un cadriciel Netfilter avec un module iptables, en mettant en exergue les différences par rapport au mode de réalisation avec le module nftables Nft.

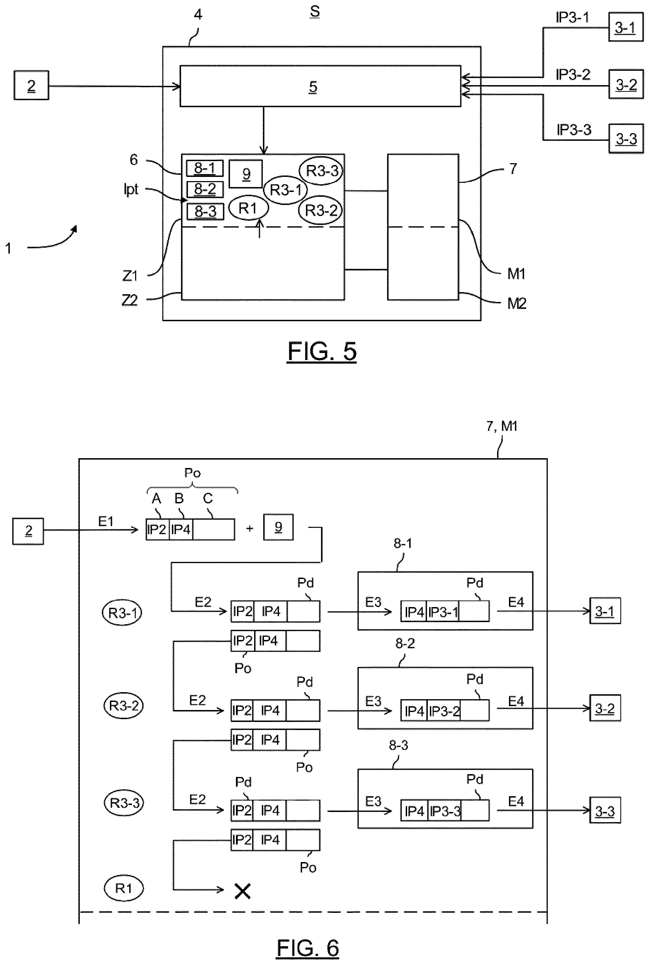

En référence à la figure 5, l'étape de signalisation S diffère du mode de réalisation précédent en ce que, à réception du signal de chaque destinataire 3-1, 3-2, 3-3, le système logiciel 6, utilisant le module iptables Ipt de Netfilter dans cet exemple, génère une troisième règle R3-1, R3-2, R3-3 qui commande uniquement l'étape de duplication E2. En outre, à réception du signal de chaque destinataire 3-1, 3-2, 3-3, le système logiciel 6 attribue, pour chaque destinataire 3-1, 3-2, 3-3, un conteneur 8-1, 8-2, 8-3, afin d'y mettre en œuvre l'étape de routage E3. Dans cet exemple, de même que précédemment, trois destinataires 3-1, 3-2, 3-3 se signalent de sorte que trois troisièmes règles R3-1, R3-2, R3-3 sont créées et trois conteneurs 8-1, 8-2, 8-3 sont attribués. Ainsi, au lieu d'implémenter une unique règle pour l'étape de duplication E2 et l'étape de routage E3 de chaque destinataire 3-1, 3-2, 3-3, le module iptables Ipt nécessite de faire appel à des conteneurs 8-1, 8-2, 8-3 pour pouvoir mettre en œuvre l'étape de routage E3 en surpassant les limitations de la zone noyau Z1. De préférence, les troisièmes règles R3-1, R3-2, R3-3 et la première règle R1 sont stockées successivement dans la chaîne de pré-routage d'une table prédéfinie de traitement de iptables, connue sous sa dénomination anglaise « mangle table ». La mise en œuvre de l'étape de routage E3 au sein de conteneurs 8-1, 8-2, 8-3 toujours au sein de la zone noyau Z1 permet avantageusement de conserver les bénéfices en termes de performance. L'étape de routage E3 est de préférence mise en œuvre en mode sans état, afin d'éviter l'apparition de mécanismes de sécurité.

En référence à la figure 6, l'étape de réception E1 est identique à celle du premier mode de réalisation. En revanche, le traitement du paquet P diffère en ce que, pour chaque destinataire 3-1, 3-2, 3-3, l'étape de duplication E2 est mise en œuvre avant l'étape de routage E3 dans le cadre de iptables Ipt. Contrairement au module nftables Nft qui requiert d'intervertir l'étape de duplication E2 et l'étape de routage E3, le module iptables Ipt permet avantageusement de conserver l'ordre traditionnel de traitement du paquet P. Par ailleurs, contrairement au module nftables Nft, seule l'étape de duplication E2 est mise en œuvre au moyen d'une règle, les étapes de routage E3 et d'envoi E4 étant mises en œuvre dans le conteneur 8-1, 8-2, 8-3 associé au destinataire 3-1, 3-2, 3-3 du paquet P.

Pour résumer, en référence aux figures 5 et 6, dans le cadre d'un système logiciel 6 équipé de iptables Ipt, le traitement du paquet P est mis en œuvre de manière traditionnelle par duplication E2 puis routage E3. La zone noyau Z1 nécessite de faire appel, d'une part à une troisième règle R3-1, R3-2, R3-3 pour la duplication E2, et d'autre part à un conteneur 8-1, 8-2, 8-3 pour le routage E3.

Le procédé de diffusion selon l'invention permet ainsi avantageusement de traiter le paquet P en mode noyau M1, en exploitant astucieusement les fonctions limitées de la zone noyau Z1, réservées traditionnellement aux opérations d'entrée et sortie. Cela permet avantageusement d'éviter de provoquer des interruptions système du système de calcul physique 7 et ainsi de réduire le temps de latence, sans augmenter les ressources du serveur d'acheminement 4. Un tel procédé de diffusion est particulièrement avantageux dans un réseau 1 contraint en termes de ressources, tel que dans le domaine militaire sur le terrain.

## Revendications

1. Procédé de diffusion d'au moins un paquet d'information (P) dans un réseau (1), ledit réseau (1) comprenant au moins un expéditeur (2) dudit paquet (P), une pluralité de destinataires (3) et au moins un serveur d'acheminement (4) comprenant au moins un équipement réseau (5) qui est relié à l'expéditeur (2) et à chacun des destinataires (3), ledit serveur d'acheminement (4) comprenant au moins un système de calcul physique (7) et au moins un système logiciel (6) configuré pour contrôler le système de calcul physique (7), ledit système de calcul physique (7) étant configuré pour opérer alternativement entre un mode noyau (M1) d'accès total et un mode utilisateur (M2) d'accès restreint, chaque destinataire (3-1, 3-2, 3-3) étant identifié par une adresse IP (IP3-1, IP3-2, IP3-3) préalablement transmise au système logiciel (6) via l'équipement réseau (5), ledit système logiciel (6) contrôlant la mise en œuvre :
• d'une étape de réception (E1) du paquet (P) de l'expéditeur (2),
• et, pour chaque destinataire (3-1, 3-2, 3-3) :
∘ d'une étape de duplication (E2) du paquet (P),
∘ d'une étape de routage (E3) du paquet (P) grâce à l'adresse IP (IP3-1, IP3-2, IP3-3) dudit destinataire (3-1, 3-2, 3-3), et
∘ d'une étape d'envoi (E4) du paquet (P) de manière à le diffuser au destinataire (3-1, 3-2, 3-3),
• l'étape de réception (E1) et l'étape d'envoi (E4) étant exécutées par le système de calcul physique (7) en mode noyau (M1),
• procédé de diffusion **caractérisé par le fait que** l'étape de duplication (E2) et l'étape de routage (E3) sont exécutées par le système de calcul physique (7) en mode noyau (M1).

2. Procédé de diffusion selon la revendication 1, dans lequel le système logiciel (6) comprend une zone noyau (Z1) et une zone utilisateur (Z2) configurées pour alternativement contrôler le système de calcul physique (7), l'étape de réception (E1), l'étape de duplication (E2), l'étape de routage (E3) et l'étape d'envoi (E4) étant contrôlées par la zone noyau (Z1) du système logiciel (6).

3. Procédé de diffusion selon l'une des revendications 1 et 2, qui est exempt, entre l'étape de réception (E1) et l'étape d'envoi (E4), d'étape de traitement du paquet (P) autre que les étapes de duplication (E2) et de routage (E3).

4. Procédé de diffusion selon l'une des revendications 1 à 3, dans lequel lors de l'étape de routage (E3), le paquet (P) comprenant des données (C) et une adresse de destination (B), l'adresse IP (IP3-1, IP3-2, IP3-3) du destinataire (3-1, 3-2, 3-3) est ajoutée dans l'adresse de destination (B) du paquet (P).

5. Procédé de diffusion selon l'une des revendications 1 à 4, dans lequel l'étape de duplication (E2) génère un paquet dit dupliqué (Pd) à partir d'un paquet dit d'origine (Po), l'étape d'envoi (E4) étant mise en œuvre avec le paquet dupliqué (Pd).

6. Procédé de diffusion selon l'une des revendications 1 à 5, dans lequel le système logiciel (6) comporte un cadriciel Netfilter comprenant un module nftables (Nft), les étapes de duplication (E2) et de routage (E3) étant contrôlées par le module nftables (Nft).

7. Procédé de diffusion selon la revendication 6, dans lequel le module nftables (Nft) implémente, pour chaque destinataire (3), l'étape de duplication (E2) et l'étape de routage (E3) à partir d'une même règle (R2-1, R2-2, R2-3) associée audit destinataire (3-1, 3-2, 3-3), l'étape de routage (E3) étant de préférence mise en œuvre avant l'étape de duplication (E2).

8. Procédé de diffusion selon l'une des revendications 1 à 5, dans lequel le système logiciel (6) comporte un cadriciel Netfilter comprenant un module iptables (Ipt), l'étape de duplication (E2) étant contrôlée par le module iptables (Ipt).

9. Procédé de diffusion selon la revendication 8, dans lequel le système de calcul physique (7) exécute, pour chaque destinataire (3-1, 3-2, 3-3), l'étape de routage (E3) au moyen d'un conteneur (8-1, 8-2, 8-3) associé audit destinataire (3-1, 3-2, 3-3), l'étape de routage (E3) étant de préférence mise en œuvre après l'étape de duplication (E2).

10. Ensemble d'un procédé de diffusion selon l'une des revendications 1 à 9 et d'une étape de signalisation (S) mise en œuvre de manière préalable audit procédé de diffusion et lors de laquelle l'expéditeur (2) se signale comme tel auprès du système logiciel (6) via l'équipement réseau (5) et chaque destinataire (3-1, 3-2, 3-3) transmet son adresse IP (IP3-1, IP3-2, IP3-3) pour recevoir le paquet (P).
